# EUROPEAN PATENT SPECIFICATION

(11) **EP 2 097 280 B1**
(45) Date of publication and mention of the grant of the patent: **25.04.2012**
(21) Application number: 07835235.8
(22) Date of filing: 26.11.2007
(51) Int. Cl.: B60G 21/055, B60G 9/00

(54) **METHODS OF MOUNTING SUSPENSION ASSEMBLIES**
VERFAHREN ZUR BEFESTIGUNG VON AUFHÄNGUNGSANORDNUNGEN
PROCÉDÉS DE MONTAGE D'ENSEMBLES DE SUSPENSION

(30) Priority: 28.11.2006 SE 0602555
(43) Date of publication of application: 09.09.2009
(73) Proprietor: Volvo Lastvagnar AB, 405 08 Göteborg (SE)
(72) Inventor: SVENSSON, Roland, 430 22 Väröbacka (SE)
(74) Representative: Fröhling, Werner Otto
(86) International application number: PCT/SE2007/001041
(87) International publication number: WO 2008/066446

(56) References cited:
- DE-A1- 4 427 172
- GB-A- 911 198
- GB-A- 911 198
- US-A- 4 180 421
- US-B1- 6 209 896

## Description

### Field of the invention

The present invention relates to methods of mounting suspension assemblies; for example, the present invention relates to methods of mounting stabilizer bars inside frames of road vehicles such as trucks, vans and lorries, although not limited thereto. Moreover, the present invention also relates to stabilizer bars mountable within frames of road vehicles by employing such methods. Furthermore, the present invention also relates to forms of mountings which are employable, for example, in conjunction with such methods of mounting such stabilizers bars and other types of components or apparatus to frames of road vehicles.

### Background of the invention

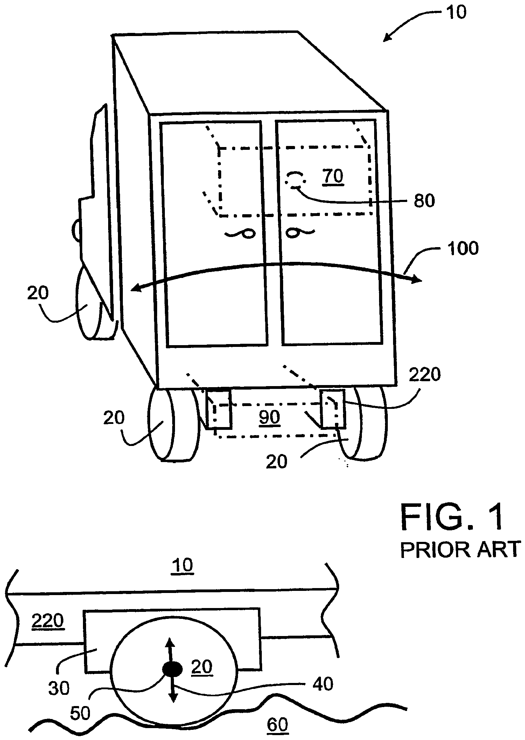

Suspension systems for road vehicles are well known. Such systems are required to be especially effective when transporting heavy loads over uneven road surfaces as such loads have associated therewith considerable momentum when the road vehicles travel at high velocities, for example approaching 100 km/hour in magnitude. Referring to Figure 1, in a road vehicle such as a lorry or truck as indicated generally by **10**, it is conventional practice to provide each wheel **20** thereof with a spring-damper assembly **30** for accommodating lateral movement **40** of axles **50** of the wheels **20** in response to the wheels **20** being driven over an uneven road surface **60.** However, for example in such a road vehicle **10** being required to bear a heavy load **70** with associated centre of gravity **80** well above a wheel base **90** of the road vehicle **10**, a stiff suspension characteristic with regard to roll denoted by an arrow **100** is important for stability and hence safety of the road vehicle **10**. Such stability is especially important when the heavy load **70** is a liquid, for example a liquid stored in a partially filled tank, whose centre of gravity **80** is susceptible to dynamically spatially changing as the liquid sloshes. Thus, contemporary suspension systems for such a road vehicle **10** exhibit mutually different spring characteristics depending upon a mode of movement stimulated in the systems. Relatively complex suspension systems are often employed in contemporary road vehicles to provide these mutually different spring characteristics, such suspension systems often occupying considerable spatial volume at lower regions of the road vehicles, namely within a wheel base of the road vehicles.

In published German patent application no. DE 1004045523 -A, there is described a rear axle for a commercial vehicle, for example for a bus or freight track. The rear axle includes a stabilizer on a lower steering plane of a body of the axle, and a four-point stabilizer at an upper steering plane to counter swaying motions which are lateral to a forward direction of travel of the vehicle, namely aforesaid rolling-type motions. There is also included a laterally-disposed torsion bar at a lower region of the lower steering plane, namely remote from the upper steering plane in a region between main longitudinal structural beams of the road vehicle to provide stiffness to resist swaying motions. A generally similar type of suspension configuration is also described in a published European patent application no. EP 949093-A.

US-B1-6 209 896 discloses a mounting assembly of a suspension system with a stabilizer bar to a road vehicle with two or more longitudinal structure beams. The assembly includes at least one retractable component which is adapted to be secured to parts to be coupled together. The component includes a flexible core operable to flexibly deform for retracting the component during installation or removal and has fasteners for applying a force to deform the flexible core.

GB 911 198 A discloses a suspension assembly for a vehicle including at least one axle assembly and a plurality of main structural beams therealong. The suspension assembly includes a torsion bar which can be coupled to the wheel axle assembly for resisting lateral swaying and rolling motion of the vehicle when in operation. The suspension assembly is implemented so that the torion bar is accommodated in a region between the main structural beams.

Although these known described implementations of road vehicle axles and associated suspension systems are operable to resisting swaying-type motions, namely rolling-type motions, they potentially have limitations regarding their strength and ease of installation and maintenance. Such ease of installation and maintenance potentially influences costs in operating a fleet of road vehicles and hence improved methods of mounting stabilizer bars of suspension systems are of potentially considerable commercial and practical benefit.

### Summary of the invention

An object of the present invention is to provide improved methods of mounting stabilizer bars, for example torsion bars, of suspension systems in road vehicles.

A further object of the invention is to provide improved methods of mounting various types of components and apparatus, for example stabilizer bars and brakes, to frames of road vehicles.

A yet further object of the invention is to provide mountings from mounting various types of components and apparatus to frames of road vehicles.

According to a first aspect of the invention, there is provided a method of installing a torsion bar suspension assembly to a suspension system of a vehicle, the vehicle including at least two main longitudinal structural beams therealong and at least one set of wheels mounted on at least one wheel axle assembly, the method characterized by including steps of:
(a) including in the torsion bar suspension assembly a torsion bar operable to torsionally flex, and also a coupling arrangement for use in coupling the torsion bar to its corresponding wheel axle assembly, the torsion bar including at least one retractable and pivotal component substantially at one or more of its extreme ends;
(b) adjusting one or more of the at least one retractable and/or pivotal component to retract and pivot it, and then moving the torsion bar assembly into position between the two or more main structural beams;
(c) coupling the coupling arrangement to the wheel axle assembly; and
(d) securing the at least one retractable and pivotal component to at least one of the two or more main structural beams.

The invention is of advantage in that use of the retractable and pivotal components enables the torsion bar assembly to be more easily installed or removed from a region between main structural beams of a vehicle.

Optionally, in the method, the at least one retractable and pivotal component includes a flexible element for enabling the at least one component to be retracted for providing clearance between the two or more structural beams when the torsion bar assembly is maneuvered therebetween during installation. Inclusion of the flexible element provides synergistic benefits of vibration dampening, accommodation of limited movement in operation in a plurality of directions, as well as more positive retention of the torsion bar assembly accurately in position between the main structural beams.

Optionally, the method includes a step of :
(e) rotating the coupling arrangement into position for engaging onto the wheel axle assembly after the torsion bar is substantially in position between the two or more main structural beams.

Such a rotational movement is conveniently achievable in the region between the two main structure beams of the vehicle.

Optionally, as an alternative or additional feature, when implementing the method, at least one retractable and pivotal component includes at least one of: a ball-and-socket type interface, a double frusto-conical interface, a single frusto-conical interface. Such a ball-and-socket type interface enables the torsion bar assembly to be more easily pivotally maneuvered into or removed from the region between the two structural beams. The fiusto-conical interfaces allow for complete retraction or at least swivel motion of the component during its installation or removal.

Optionally, when implementing the method, at least one retractable and pivotal component includes a flexible core operable to flexibly deform for retracting the at least one component when the torsion bar assembly is being installed in the vehicle.

More optionally, the method includes a step of: tightening fasteners associated with the at least one retractable and pivotal component for flexibly deforming the flexible core during installation of the torsion bar assembly.

According to a second aspect of the invention, there is provided a method of removing a torsion bar suspension assembly from a suspension system of a vehicle, the vehicle including at least two main longitudinal structural beams therealong and at least one set of wheels mounted on at least one wheel axle assembly, the method characterized by including steps of
(a) including in the torsion bar suspension assembly a torsion bar operable to torsionally flex, and also a coupling arrangement for use in coupling the torsion bar to its corresponding wheel axle assembly, the torsion bar including at least one retractable and pivotal component substantially at one or more of its extreme ends;
(b) decoupling the coupling arrangement from the wheel axle assembly and then adjusting the at least one retractable and pivotal component for releasing its abutment to the two or more main structural beams; and
(c) removing the torsion bar assembly away from its position between the two or more main structural beams.

According to a third aspect of the invention, there is provided a torsion bar assembly including a torsion bar operable to undergo torsional flexure when installed in a vehicle including two or more main longitudinal structure beams therealong, characterized in that the torsion bar includes substantially at its ends a coupling arrangement adapted to be secured to a wheel axle assembly of the vehicle, and the torsion bar further includes at least one retractable and pivotal component substantially at one or more of its extreme ends, the at least one component being adapted to be secured to the main longitudinal structure beams for accommodating the torsion bar in a region between the beams.

Optionally, in the torsion bar assembly, at least one retractable and pivotal component includes a flexible element for enabling the at least one component to be retracted for providing clearance between the two or more structural beams when the torsion bar assembly is maneuvered therebetween during installation.

Optionally, in the torsion bar assembly, the at least one retractable and pivotal component includes at least one of: a ball-and-socket type interface, a frusto-conical interface, a double frusto-conical interface.

Optionally, in the torsion bar assembly, the at least one retractable and pivotal component includes a flexible core operable to flexibly deform for retracting the at least one component when the torsion bar assembly is being installed into or removed from the vehicle.

More optionally, the torsion bar assembly including features for receiving tightening fasteners for flexibly deforming the at least one flexible core during installation of the torsion bar assembly.

Optionally, in the torsion bar assembly, the flexible core is implemented as an atmulus of flexible material at least partially enclosed within a plurality of mutually substantially concentric tubes.

It will be appreciated that features of the invention are susceptible to being combined in any combination without departing from the scope of the invention as defined in the appended claims.

### Description of the drawings

Embodiments of the invention will now be described, by way of example only, with reference to the following diagrams wherein:
- Figure 1: is an illustration of a contemporary road vehicle, for example a lorry or truck, wherein lateral swaying or rolling motion of the vehicle is defined; there is also illustrated inset a side view of a wheel of the vehicle in contact with an uneven ground surface;
- Figure 2: is an underside sketch view of a contemporary road vehicle wherein lateral swaying or rolling motion of the vehicle is resisted in operation by a torsion bar which is mounted relatively low in a suspension system of the road vehicle, for example below a height of a wheel axle assembly of the vehicle;
- Figure 3: is another sketch view of the torsion bar illustrated in foregoing Figure 2;
- Figure 4: is a perspective view of an embodiment of a torsion bar assembly pursuant to the present invention;
- Figure 5: is an enlarged sketch view of a mounting assembly of the torsion bar assembly shown in Figure 4, wherein the mounting assembly includes a mounting plate which is operable to be flexibly retracted during installation of the torsion bar assembly into the road vehicle;
- Figure 6: is an enlarged sketch view of the mounting plate coupled to the torsion bar of Figure 5;
- Figure 7: is an enlarged rear sketch view of the mounting plate of Figure 5;
- Figure 8: is a cross-section illustration of the mounting assembly of Figure 5, wherein a flexible internal bushing interfacing between the torsion bar and the mounting plate is shown;
- Figures 9a, 9b, 9c: are illustrations of alternative embodiments of the mounting assembly which provide additional benefit of a more flexible interface between the torsion bar and the mounting plate to further assist with installation of the torsion bar assembly into the vehicle and dismounting therefrom; and
- Figures 10 to 14: are illustrations of five steps executable for installing the torsion bar assembly of Figure 4 into the road vehicle.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### Description of Embodiments of the invention

In overview, embodiments of the present invention are based on a concept of a torsion bar assembly for resisting lateral swaying or rolling motions of a road vehicle, wherein extreme ends of the torsion bar assembly are susceptible to being retracted and pivoted so as to enable convenient installation the torsion bar assembly in a region between longitudinal main structural beams of the vehicle. Such retraction and pivoting is also beneficially employed when removing the torsion bar assembly from the vehicle, for example for purposes of maintenance or repair. By spatially locating the torsion bar assembly substantially in a region between the main structural beams, space is created at lower regions of the vehicle for other equipment and facilities, for example hydraulically-actuated mechanical stabilizing feet for deployment when the vehicle is tipping and otherwise moving its load affecting a centre of gravity of the vehicle appreciably.

Retractable mountings for inclusions at one or more ends of the torsion bar are also susceptible to being used to mount other components and apparatus to the main structural beams, for example ancillary apparatus, additional electrical batteries, additional brakes, couplings, strengthening beams, deployable wheel supports although not limited thereto. Such additional brakes are susceptible to being implemented, for example, as a Telma retarder which is mounted within a wheelbase of a road vehicle.

In order to further describe the present invention and also elucidate benefits thereby provided, embodiments of the present invention will now be described.

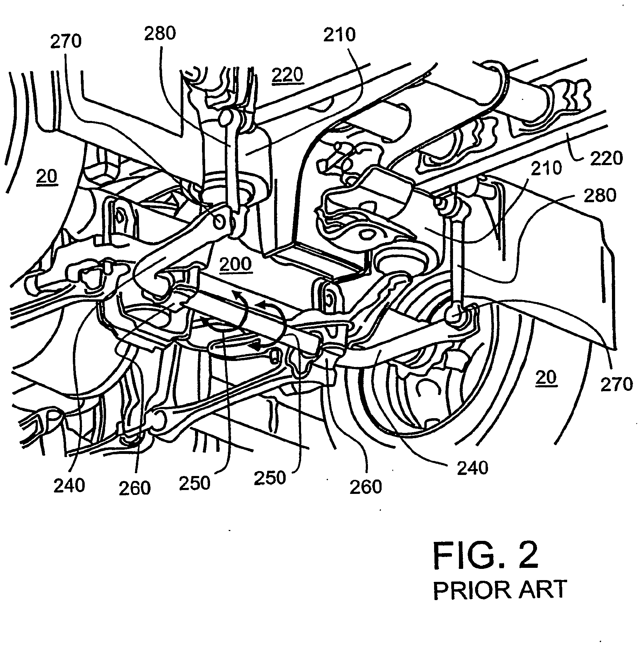

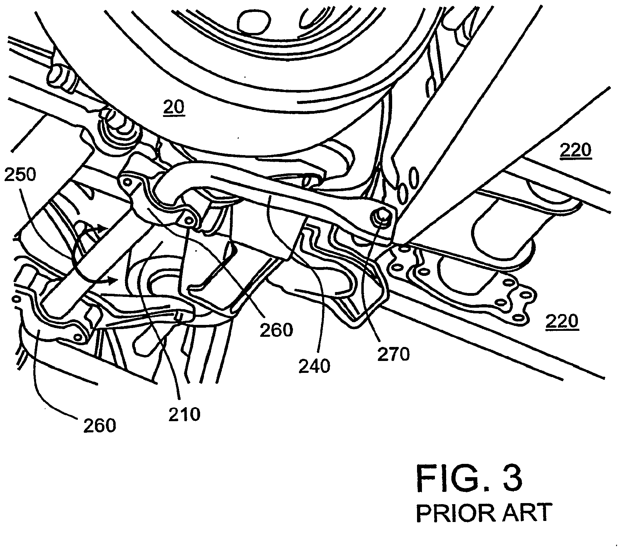

Referring to Figures 2 and 3, there is shown a sketch view of a lower region of the aforesaid truck **10** looking upwards. The aforementioned wheels **20** are coupled via an axle assembly denoted by **200** which is buffered in respect of two longitudinal main beams **220** of the vehicle **10** by way of air springs **210.** The wheels **20** themselves are optionally provided with pivotally-mounted rear mud flaps. The axle assembly **200** is coupled via flexible mounting bushes **260** to a torsion bar **240** of "U"-type shape which is coupled at its ends via pivotal couplings **270** to first ends of linking bars **280**; the torsion bar **240** is beneficially implemented as a hollow tube so as to reduce weight of the road vehicle **10.** Second ends of the linking bars **280** are pivotally attached to the aforesaid main beams **220** as illustrated. The torsion bar **240** is operable to exhibit torsional flexure as denoted by arrows **250** to resist aforesaid swaying-type motion, namely aforesaid rolling-type motion **100**, as illustrated in Figure 1.

It is to be appreciated from Figures 2 and 3 that the suspension for the vehicle **10** is relatively complex and includes a considerable number of mechanical components. Moreover, the torsion bar **240** is relatively exposed to potential damage and also prevents other apparatus such as deployable stabilizing struts being accommodated close to the wheels **20**. Such stabilizing struts are beneficially employed in road vehicles functioning as cranes or tipper trucks to try to prevent the road vehicles **10** from tipping over or overturning in stationary operation. Furthermore, the torsion bar **240** illustrated in sketch form in Figure 2 is potentially exposed to corrosion, for example to salt spread on roads, turnpikes and highways during winter.

The present invention is distinguished from a contemporary approach for accommodating the torsion bar **240** as depicted in Figures 2 and 3 by moving the torsion bar **240** so that it is accommodated between the main beams **220.** Such a relative spatial repositioning of the torsion bar **240** superficially would seem unattractive because the region between the main beams **220** is already congested with various mechanical components. Moreover, the torsion bar **240** together with its mounting bushes **260** and pivotal couplings **270** as depicted in Figures 2 and 3 would superficially appear to be readily accessible for replacement and/or maintenance purposes. Even if spatial repositioning of the torsion bar **240** between the main beams **220** were theoretically considered, technical problems associated with its implementation would superficially seem insurmountable. However, surprisingly, in the present invention, an efficient and convenient approach to mounting the torsion bar **240** between the main beams **220** has been inventively developed which will now be described in detail by way of example.

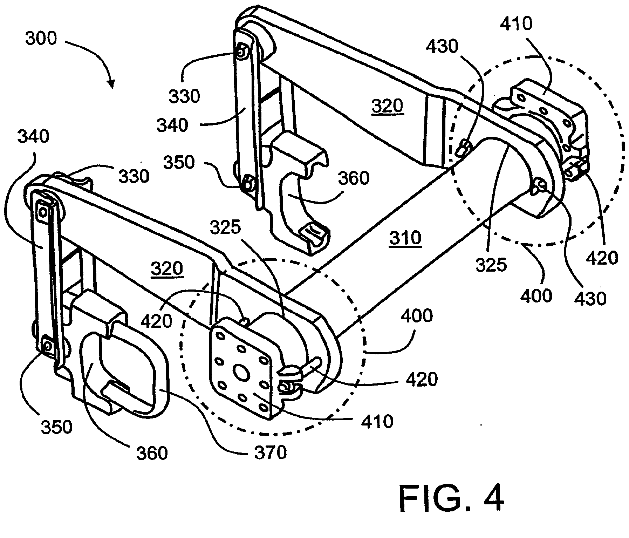

Referring to Figure 4, there is shown a torsion bar assembly indicated generally by **300**. The assembly **300** includes a hollow tubular elongate torsion bar **310** rigidly joined at substantially its ends to two elongate coupling plates **320** as illustrated; a longitudinal axis of the torsion bar **310** is substantially perpendicular to longitudinal axes of the coupling plates **320.** Optionally, the elongate torsion bar **310** is implemented as a solid non-hollow member provided with end recesses for mounting purposes as will be further elucidated later. Both the torsion bar **310** and the coupling plates **320** are fabricated from a metal or metal alloy. Optionally, the torsion bar **310** and the two coupling plates **320** are manufactured from mild steel, stainless steel, carbon steel or similar which is operable to accommodate flexure whilst simultaneously providing a high mechanical strength. Yet alternatively, one or more of the torsion bar **310** and the two coupling plates **320** are fabricated from high-performance composite materials, for example carbon fibre-reinforced resin. The torsion bar **310** is conveniently joined to its coupling plates **320** by way of a welded seam **325** implemented on both sides of the coupling plates **320** whereat abutnent occurs. In manufacture, such welding is beneficially executed simultaneously from both sides, so that the each coupling plate **320** is welded through its thickness to the torsion bar **310** for enhanced strength and reliability. However, as an alternative, the torsion bar **310** is susceptible to being joined to its coupling plates **320** by other techniques including one or more of: brazing, fastening using nuts and bolts, fastening using rivets, fastening using coupling pins, fastening by thermal compression fit, bonding by using organic polymer resins. One or more ends of the torsion bar **310** are provided with a mounting assembly as denoted by **400**; beneficially, both ends of the torsion bar **300** are each provided with such a mounting assembly **400.** Each mounting assembly **400** includes a mounting plate **410** flexibly coupled to the torsion bar **310.** There are thus two mounting plates **410** which are operable to be bolted or otherwise fastened or attached to inside facing surfaces of the main beams **220** elucidated in the foregoing. Each mounting plate **410** is further adapted to receive fasteners **420**, for example in a range of M8 to M16 threaded studding provided with nuts **430**. The coupling plates **320** are provided with holes for receiving the fasteners **420** so that, as will be described in more detail later, the fasteners **420** are susceptible to being tightened to draw the mounting plates **410** inwards towards a centre region of the torsion bar **310** to shorten an overall length of the torsion bar assembly **300** to assist with its installation between the aforesaid main beams **220** or removal therefrom. The fasteners **420** are removable from the mounting plates **410** and the coupling plates **320** during normal operation and are intended to be used only temporarily during installation or removal of the torsion bar assembly **300** from the vehicle **10**.

Optionally, the torsion bar **310** is tapered inwardly at its ends whereat it abuts onto the coupling plates **320** so that a middle portion of the torsion bar **310** has a greater outside diameter than ends of the torsion bar **310.** Alternatively, the torsion bar **310** is optionally tapered outwardly at its ends whereat it abuts onto the coupling plates **320** so that a middle portion of the torsion bar **310** has a smaller outside diameter than ends of the torsion bar **310.** Although the torsion bar **310** is shown in Figure 4 to be of substantially circular or oval cross-sectional profile, the torsion bar **310** optionally has other cross-sectional profiles, for example a hollow rectangular cross-sectional profile. Optionally, the coupling plates **320** are formed with one or more steps therein, for example an inward step as shown in Figure 4, for providing clearance in respect of other surfaces and components present within the region between the main beams **220.** At extreme end of the mounting plates **320** remote the torsion bar **310** are included rotary bushes, for example washers, and couplers **330** for pivotally coupling the aforesaid extreme ends to first ends of coupling members **340**. Optionally, as illustrated, the coupling members **340** are each implemented as two strips of L-profile metal with a fixing plate welded or otherwise attached therebetween; however, other implementations of the coupling members **340** using other metal profiles are also possible. Second ends of the coupling members **340** are pivotally joined by rotary bushes and couplers **350** to clamping members **360**. Each clamping member **360** is provided with a clamping bar **370** which is operable to cooperate with its clamping member **360** to bind around the aforesaid axle assembly **200.**

In operation, mutually relative rotation of the coupling plates **320** arises by way of a torsional flexure of the torsion bar **310**. Moreover, the torsion bar **310** is susceptible to rotating to a limited degree relative to the mounting plates **410** when installed within the vehicle **10** with corresponding relative ease in comparison to the torsional stiffness of the torsion bar **310**.

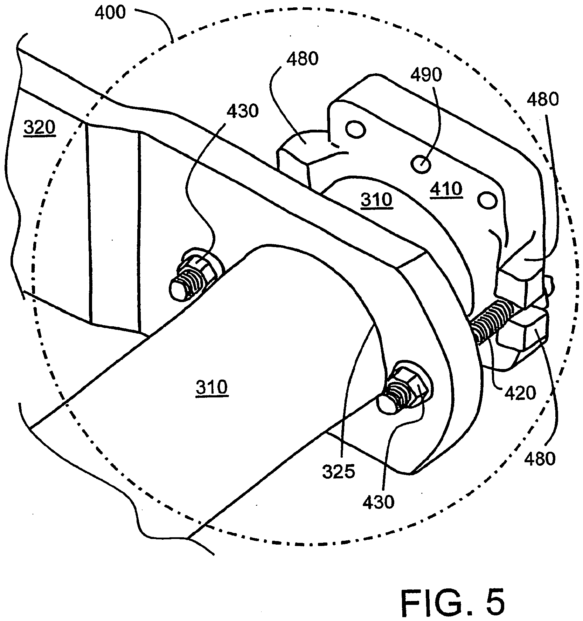

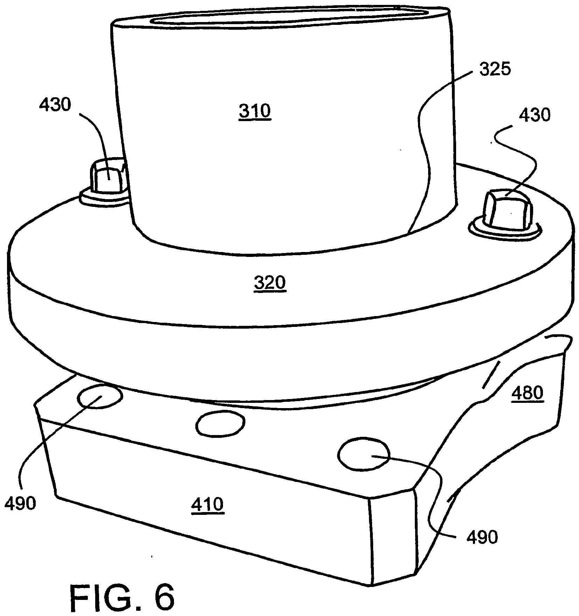

In Figure 5, the mounting assembly **400** is shown in enlarged view wherein the mounting plate **410** includes four projections **480** (see Figure 6), namely two in each side, for receiving the two fasteners **420** in a removable manner so that the fasteners **420** can be extracted after installation of the torsion bar assembly **300**. The mounting plate **410** is provided with eight mounting holes, for example a hole **490**, for locating onto pins, screws or similar locating projections provided on the main beams 220 so that the mounting plates **410** remain firmly in position to the main beams **220** during operation. However, the mounting plate **410** can optionally be provided with more than eight holes, or alternatively less than eight holes.

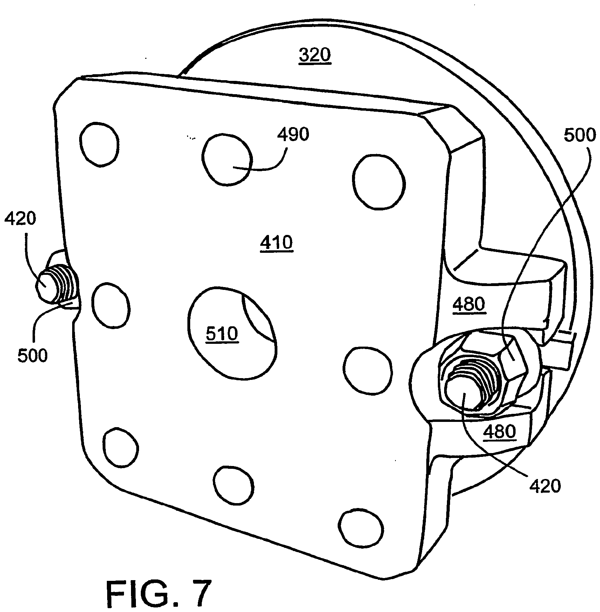

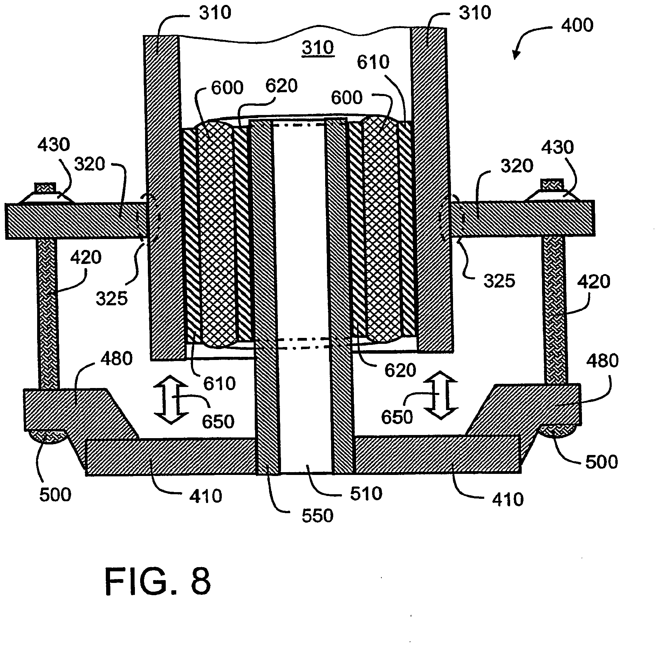

Referring to Figure 6, the mounting plate **410** is shown in another perspective view with the coupling plate **320** in modified form. Moreover, in Figure 7, the mounting plate **410** is shown in underside view illustrating its eight mounting holes **490**, the projections **480** and the fasteners **420** provided with threaded nuts **500**. The mounting plate **410** includes a central hole **510** whereat the mounting plate **410** has a central projection which, in the torsion bar assembly **300**, extends into extreme ends of the torsion bar **310** as will be later elucidated with reference to Figure 8.

In Figure 8, the mounting assembly **400** is shown in detail in cross-sectional view. The mounting plate **410** includes an inner tube **550** providing the aforesaid hole **510.** Optionally the tube **550** and a remainder of the mounting plate **410** are an integral component, for example fabricated by metal casting followed by machining operations such as milling and drilling. Alternatively, optionally the tube **550** is a separate part which is subsequently joined to the remainder of the mounting plate **410** during manufacture, for example by welding, brazing or similar. The torsion bar **310** is mounted to the tube **550** by way of a flexible interfacing component comprising a substantially cylindrical flexible core **600** having an inner tube **620** and an outer tube **610**; the core **600** and the tubes **610**, **620** are optionally mutually substantially concentric as illustrated. The flexible core **600** is optionally fabricated from a material including voids therein, for example micropores. Optionally, the core **600** has a closed-pore structure. Alternatively, the core **600** is an open-pore structure for allowing more rapid gas exchange. Yet alternatively, the core **600** is fabricated from a solid flexible material. For example, the core **600** is susceptible to being fabricated from vulcanized rubber, rubber, silicone, a plastics material such as polypropylene, a plastics material including voids, a configuration of mechanical spring elements, and so forth. The core **600** is beneficially permanently bonded to its associated inner and outer tubes **620**, **610** respectively, for example by way of a molding process during fabrication. Optionally, the core **600** can be implemented as a sliding component, or at least partially sliding component, for example fabricated from nylon, Teflon (trade mark) or similar optionally slidable over a limited distance so that less force is required to retract the mounting plate **410** during installation or removal of the torsion bar assembly **300.**

Optionally, the torsion bar **310** has an outside diameter in its central region of 110 mm tapering to an outside diameter of 83 mm at its extreme ends whereat it abuts to the coupling plates **320.** Optionally, the inner tube **620** has a wall thickness in a radial direction of 6 mm and the outer tube **610** has a wall thickness in a radial direction of substantially 3 mm. Moreover, the core **600** preferably has a wall thickness in a radial direction in a range of 6 mm to 15 mm, more preferably substantially 12 mm, and most preferably substantially 11.5 mm. The tubes **610**, **620** beneficially have a longitudinal length in a range of 70 mm to 90 mm, and more preferably in a range of substantially 75 mm to 85 mm.

As elucidated in the foregoing, the fasteners **420** are not intended to be permanent features of the mounting assembly **400** and are envisaged to be removed after installation of the mounting assembly **400** to the main beams **220**. Tightening the nuts **430** onto the fasteners **420** is operable to change a relative distance between the torsion bar **310** and the mounting plate **410** as denoted by arrows **650**, namely the mounting plate **410** is susceptible to being retracted towards the torsion bar **310** during installation of the suspension assembly **300** into the road vehicle **10**.

The aforesaid core **600** is operable to perform several synergistic functions. It maintains the torsion bar **310** centered in operation between the main beams **220**. Moreover, the core **600** provides vibration dampening. Furthermore, the core **600** is designed to deform so as to enable the mounting plate **410** to be retracted during installation of the torsion bar assembly **300**.

In a variation of the mounting assembly **400** as illustrated in Figure 8, the tube **550** is rendered of larger diameter than the extreme end of the torsion bar **310** so that the core **600** and its tubes **610**, **620** are substantially enclosed within the tube **550**, and the end of the torsion bar **310** is substantially enclosed within the inner tube **620.** Such an alternative arrangement is potentially less optimal than as shown in Figure 8 on account of size and bulk, thereby rendering installation less easy. However, such an alternative implementation enables the core **600** to be made physically larger and hence provide a more robust configuration.

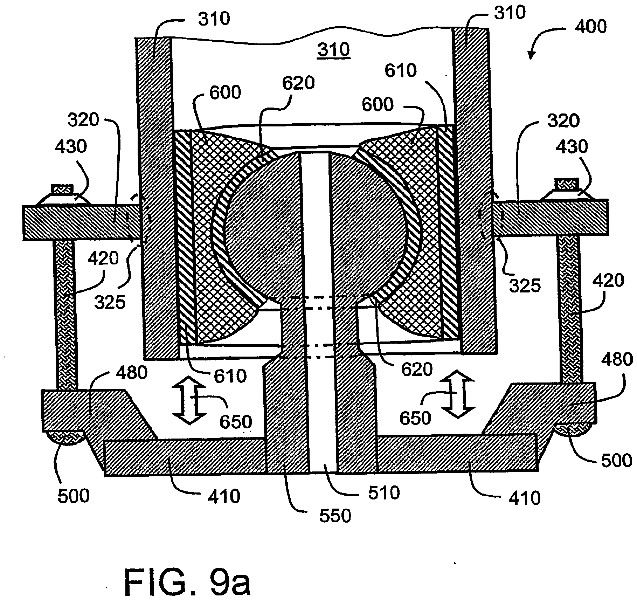

A yet alternative implementation of the mounting assembly **400** is illustrated in Figure 9a, wherein the tube **550** is formed, for example by hydroforming or machining, into a spherical component which is rotatable within the inner tube **620** in a manner of a ball-and-socket joint so as to ease installation of the torsion bar assembly **300** into the vehicle **10.** Optionally, the core **600** is included as illustrated, although pivoting provided by the aforesaid ball-and-socket joint potentially allows for the core **600** to be omitted. Such an implementation is susceptible to circumventing a need to employ the fasteners **420** on account of pivoting of the tube **550** relative to the torsion bar **310** being sufficient for enabling installation of the torsion bar assembly **300** implemented in this alternative manner between the main beams **220** of the road vehicle **10.**

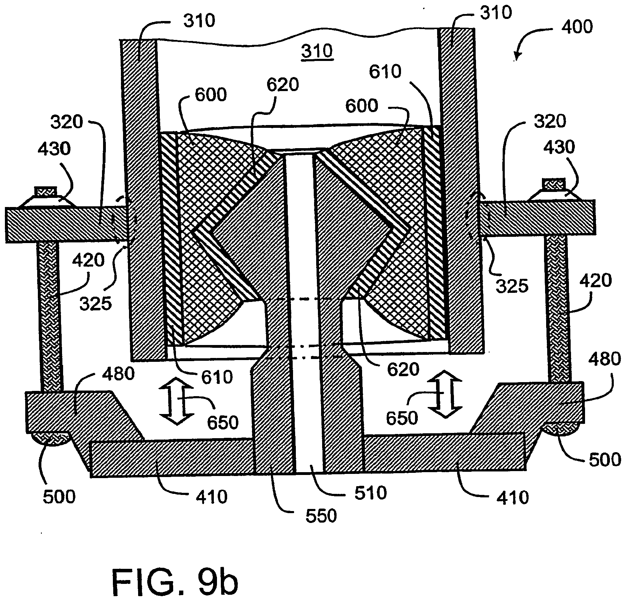

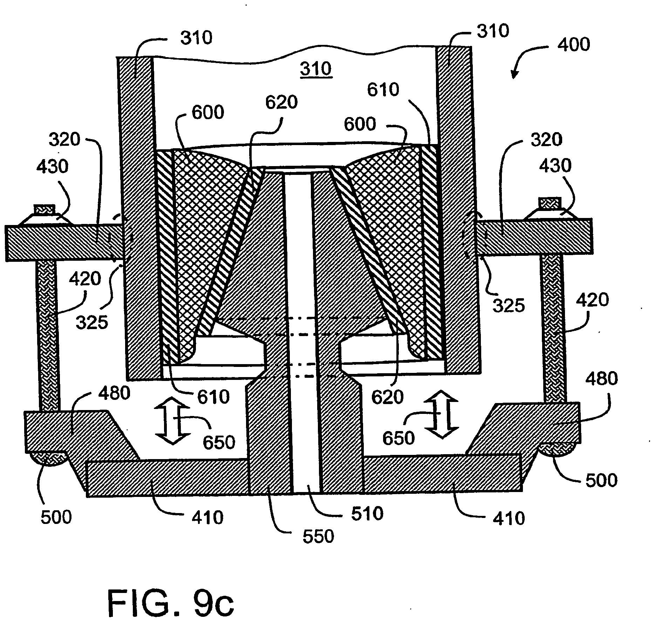

Alternative implementations of the mounting assembly **400** are feasible as illustrated in Figures 9b and 9c. In Figure 9b, a double frusto-conical implementation is shown which allows flexible deformation of the core 600 and also relatively easy rotation of the mounting assembly 400 during installation, for example for aligning mounting holes **490.** Moreover, in Figure 9c, a single frusto-conical implementation is shown which optionally allows removal of the mounting assembly from the torsion bar **310** whilst also accommodating flexible compression using the aforesaid fasteners **420.**

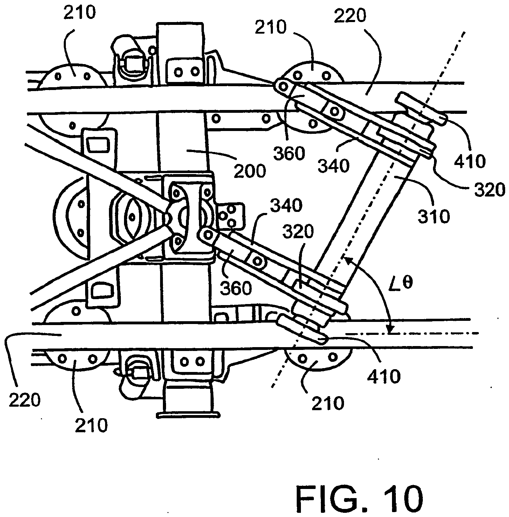

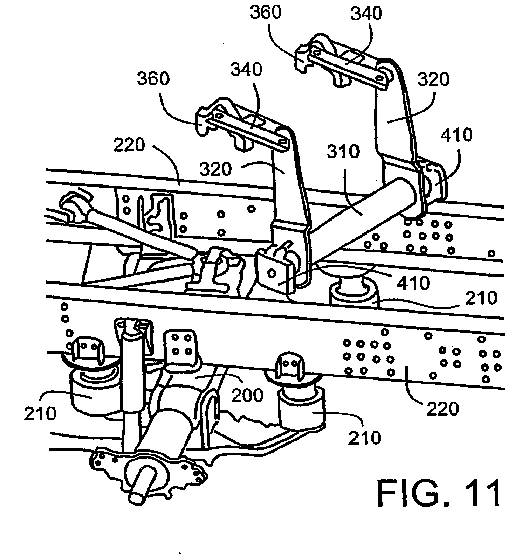

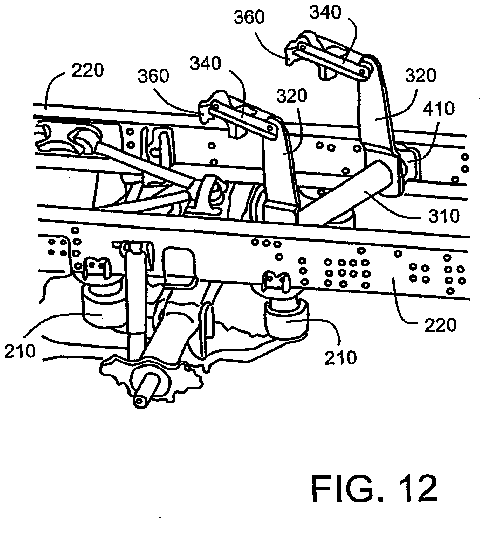

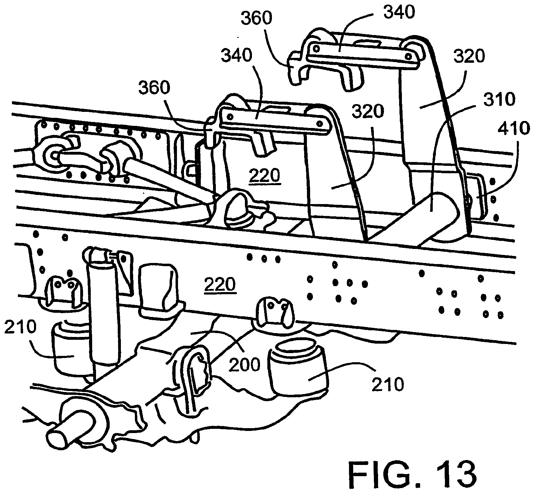

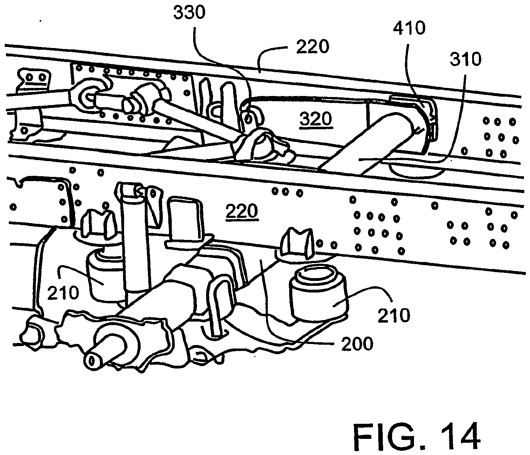

A method of installing the torsion bar assembly **300** into the vehicle **10** will now be described with reference to Figures 10 to 14. It will be appreciated that the method is susceptible to being varied, for example to maneuver around other components and parts mounted to the main beams **220** of the vehicle **10.** The method optionally includes a sequence of five nominal steps as follows:
STEP 1: In Figure 10, there is shown a sketch plan view of a portion of the vehicle **10** viewing from above looking downwards. The mounting plates **410** of the torsion bar assembly **300** are retracted towards the centre region of the torsion bar **310** by tightening up the aforesaid fasteners **420.** Thereafter, the torsion bar assembly **300** is angularly orientated as illustrated so that its longitudinal axis subtends an angle θ relative to longitudinal axes of the main beams **220.** The angle θ is beneficially in a range of 45° to 80° depending of dimensions of component parts of the vehicle **10.** The coupling plates **320** are then swung into an upward vertical orientation, or other similar position which is most convenient in response to other component parts of the vehicle **10** being present, so that the coupling members **340** are substantially horizontal with their associated clamping members **360** hanging downwards as illustrated in both Figures 10 and 11.
STEP 2: In Figure 11, the torsion bar **310** is then moved in a downwards direction into an empty region between the main beams **220** whilst maintaining substantially the aforesaid angle 0 so that the mounting plates **410** clear inwardly directed upper and lower edges of the main beams **220** as illustrated which would otherwise obstruct installation of the torsion bar assembly **300**. During this step 2, the mounting plates **410** remain retracted towards the centre region of the torsion bar **310**.
STEP 3: In Figure 12, the torsion bar **310** is maneuvered into position in the region between the main beams **220**.
STEP 4: In Figure 13, the torsion bar **310** is rotated so that the aforesaid angle θ becomes substantially 90° so the longitudinal axis of the torsion bar **310** is perpendicular to the longitudinal axes of the main beams **220**.
STEP 5: In Figure 14, the coupling plates **320** are then swung around so that their elongate longitudinal axes are substantially parallel to the longitudinal axes of the main beams **220** as illustrated. The coupling members **340** are thereby able to swing into a downwards vertical position, thereby allowing the clamping members **360** to be secured around the wheel axle assembly **200** using the aforesaid clamping bars **370.** The mounting plates **410** are then adjusted in position to align with holes or other alignment features included on the main beams **220** whilst progressively loosening the fasteners **420** so that flexibility of the cores **600** results in the mounting plates **410** abutting onto substantially vertical surface so the main beams **220** as illustrated. Optionally, the mounting plates **410** are firmly secured using bolts or similar to the main beams **220** and then the fasteners **420** are completely removed from the mounting plates **410**.

Modifications to embodiments of the invention described in the foregoing are possible without departing from the scope of the invention as defined by the accompanying claims.

As elucidated earlier, the mounting plate 410 with its flexible core 600 and associated concentric tubes 610, 620 is couplable to the coupling plate 320 and is retractable in respect thereof; such a retractable arrangement renders the mounting plate 410 of considerable benefit in a context of installation and/or removal of the torsion bar assembly 300.

Numerals included within parentheses in the accompanying claims are intended to assist understanding of the claims and should not be construed in any way to limit subject matter claimed by these claims.

## Claims

1. A method of installing a torsion bar suspension assembly (300) to a suspension system of a vehicle (10), said vehicle (10) including at least two main longitudinal structural beams (220) therealong and at least one set of wheels (20) mounted on at least one wheel axle assembly (200), said method **characterized by** including steps of:
(a) including in the torsion bar suspension assembly (300) a torsion bar (310) operable to torsionally flex, and also a coupling arrangement (320, 340, 360) for use in coupling the torsion bar (310) to its corresponding wheel axle assembly (200), said torsion bar (310) including at least one retractable and pivotal component (410, 600, 610, 620) substantially at one or more of its extreme ends;
(b) adjusting one or more of said at least one retractable and pivotal component (410, 600, 610, 620) to retract and pivot it, and then moving said torsion bar assembly (300) into position between said two or more main structural beams (220);
(c) coupling said coupling arrangement (320, 340, 360) to said wheel axle assembly (200); and
(d) securing the at least one retractable and pivotal component (410, 600, 610, 620) to at least one of said two or more main structural beams (220).

2. A method as claimed in claim 1, wherein said at least one retractable and pivotal component (410, 600, 610, 620) includes a flexible element (600) for enabling said at least one component (410, 600, 610, 620) to be retracted for providing clearance between said two or more structural beams (220) when said torsion bar assembly (300) is maneuvered therebetween during installation.

3. A method as claimed in claim 1 or 2, including a step of:
(e) rotating said coupling arrangement (340, 360, 370) into position for engaging onto said wheel axle assembly (200) after said torsion bar (310) is substantially in position between said two or more main structural beams (220).

4. A method as claimed in any one of the preceding claims, wherein said at least one retractable and pivotal component includes at least one of: a ball-and-socket type interface, a double frusto-conical interface, a single frusto-conical interface.

5. A method as claimed in any one of the preceding claims, wherein at least one retractable and pivotal component includes a flexible core (600) operable to flexibly deform for retracting said at least one component (410, 600, 610, 620) when said torsion bar assembly (300) is being installed into said vehicle (10).

6. A method as claimed in claim 5, including a step of: tightening fasteners (420, 430, 500) associated with said a least one retractable and pivotal component (410, 600, 610, 620) for flexibly deforming said flexible core (600) during installation of the torsion bar assembly (300).

7. A method of removing a torsion bar suspension assembly (300) from a suspension system of a vehicle (10), said vehicle (10) including at least two main longitudinal structural beams (220) therealong and at least one set of wheels (20) mounted on at least one wheel axle assembly (200), said method **characterized by** including steps of:
(a) including in the torsion bar suspension assembly (300) a torsion bar (310) operable to torsionally flex, and also a coupling arrangement (320, 340, 360) for use in coupling the torsion bar (310) to its corresponding wheel axle assembly (200), said torsion bar (310) including at least one retractable and pivotal component (410, 600, 610, 620) substantially at one or more of its extreme ends;
(b) decoupling said coupling arrangement (320, 340, 360) from said wheel axle assembly (200) and then adjusting said at least one retractable and pivotal component (410, 600, 610, 620) for releasing its abutment to said two or more main structural beams (220); and
(c) removing said torsion bar assembly (300) away from its position between said two or more main structural beams (220).

8. A torsion bar assembly (300) including a torsion bar (310) operable to undergo torsional flexure when installed in a vehicle (10) including two or more main longitudinal structure beams (220), **characterized in that** said torsion bar (310) includes substantially at its ends a coupling arrangement (340, 360, 370) adapted to be secured to a wheel axle assembly of said vehicle (10), and said torsion bar (310) further includes at least one retractable and pivotal component (410, 600, 610, 620) substantially at one or more of its extreme ends, said at least one component (410, 600, 610) being adapted to be secured to said main longitudinal structure beams (220) for accommodating said torsion bar (310) in a region between said beams (220).

9. A torsion bar assembly (300) as claimed in claim 8, wherein said at least one retractable and pivotal component (410, 600, 610, 620) includes a flexible element (600) for enabling said at least one component (410, 600, 610, 620) to be retracted for providing clearance between said two or more structural beams (220) when said torsion bar assembly (300) is maneuvered therebetween during installation.

10. A torsion bar assembly (300) as claimed in claim 8 or 9, wherein said at least one retractable and pivotal component includes at least one or: a ball-and-socket type interface, a double frusto-conical interface, a single frusto-conical interface.

11. A torsion bar assembly (300) as claimed in any one of claims 8 to 10, wherein said at least one retractable and pivotal component includes a flexible core (600) operable to flexibly deform for retracting said at least one component (410, 600, 610, 620) when said torsion bar assembly (300) is being installed into or removed from said vehicle (10).

12. A torsion bar assembly (300) as claimed in claim 11, including features for receiving tightening fasteners (420, 430, 500) for flexibly deforming said at least one flexible core (600) during installation of the torsion bar assembly (300).

13. A torsion bar assembly (300) as claimed in any one of claims 8 to 12, wherein said flexible core (600) is implemented as an annulus of flexible material at least partially enclosed within a plurality of mutually substantially concentric tubes (610, 620).

## Patentansprüche

1. Verfahren zum Installieren einer Torsionsstabaufhängungsanordnung (300) an einem Aufhängungssystem eines Fahrzeugs (10), wobei das Fahrzeug (10) wenigstens zwei Hauptlängsstrukturträger (220) entlang desselben und wenigstens einen Satz Räder (20) aufweist, die auf wenigstens einer Radachsenanordnung (200) angebracht sind, wobei das Verfahren **dadurch gekennzeichnet ist, dass** es die Schritte aufweist:
(a) Einschließen eines Torsionsstabs (310), der für eine Torsionsbiegung betätigbar ist, und außerdem einer Kopplungsanordnung (320, 340, 360) zur Verwendung bei der Kopplung des Torsionsstabs (310) mit seiner entsprechenden Radachsenanordnung (200) in der Torsionsstabaufhängungsanordnung (300), wobei der Torsionsstab (310) im Wesentlichen an einem oder mehreren seiner äußersten Enden wenigstens ein zurückziehbares und verschwenkbares Bauteil (410, 600, 610, 620) aufweist;
(b) Einstellen eines oder mehrerer des wenigstens einen zurückziehbaren und verschwenkbaren Bauteils (410, 600, 610, 620), um es zurückzuziehen und zu verschwenken, und dann Bewegen der Torsionsstabanordnung (300) in Position zwischen den zwei oder mehr Hauptstrukturträgern (220);
(c) Koppeln der Kopplungsanordnung (320, 340, 360) an die Radachsenanordnung (200); und
(d) Befestigen des wenigstens einen zurückziehbaren und verschwenkbaren Bauteils (410, 600, 610, 620) an wenigstens einem der zwei oder mehr Hauptstrukturträger (220).

2. Verfahren nach Anspruch 1, wobei das wenigstens eine zurückziehbare und verschwenkbare Bauteil (410, 600, 610, 620) ein flexibles Element (600) aufweist, um zu ermöglichen, dass das wenigstens eine Bauteil (410, 600, 610, 620) zurückgezogen wird, um einen Freiraum zwischen den zwei oder mehr Strukturträgern (220) zu schaffen, wenn die Torsionsstabanordnung (300) während der Installierung zwischen diese manövriert wird.

3. Verfahren nach Anspruch 1 oder 2, das den folgenden Schritt aufweist:
(e) Drehen der Kopplungsanordnung (340, 360, 370) in Position für einen Eingriff auf die Radachsenanordnung (200), nachdem sich der Torsionsstab (310) im Wesentlichen in Position zwischen den zwei oder mehr Strukturträgern (220) befindet.

4. Verfahren nach irgendeinem der vorhergehenden Ansprüche, wobei das wenigstens eine zurückziehbare und verschwenkbare Bauteil wenigstens eine aus einer Kugelgelenk-Schnittstelle, einer Doppelkegelstumpf-Schnittstelle und einer Einzelkegelstumpf-Schnittstelle aufweist.

5. Verfahren nach irgendeinem der vorhergehenden Ansprüche, wobei wenigstens ein zurückziehbares und verschwenkbares Bauteil (410, 600, 610, 620) einen flexiblen Kern (600) aufweist, der für eine flexible Verformung betätigbar ist, um das wenigstens eine Bauteil (410, 600, 610, 620) zurückzuziehen, wenn die Torsionsstabanordnung (300) in dem Fahrzeug (10) installiert wird.

6. Verfahren nach Anspruch 5, das den folgenden Schritt aufweist: Anziehen von Befestigungselementen (420, 430, 500), die dem wenigstens einen zurückziehbaren und verschwenkbaren Bauteil (410, 600, 610, 620) zugeordnet sind, um den flexiblen Kern (600) während der Installierung der Torsionsstabanordnung (300) flexibel zu verformen.

7. Verfahren zum Entfernen einer Torsionsstabaufhängungsanordnung (300) von einem Aufhängungssystem eines Fahrzeugs (10), wobei das Fahrzeug (10) wenigstens zwei Hauptlängsstrukturträger (220) entlang desselben und wenigstens einen Satz Räder (20) aufweist, die auf wenigstens einer Radachsenanordnung (200) angebracht sind, wobei das Verfahren **dadurch gekennzeichnet ist, dass** es die Schritte aufweist:
(a) Einschließen eines Torsionsstabs (310), der für eine Torsionsbiegung betätigbar ist, und außerdem einer Kopplungsanordnung (320, 340, 360) zur Verwendung bei der Kopplung des Torsionsstabs (310) mit seiner entsprechenden Radachsenanordnung (200) in der Torsionsstabaufhängungsanordnung (300), wobei der Torsionsstab (310) im Wesentlichen an einem oder mehreren seiner äußersten Enden wenigstens ein zurückziehbares und verschwenkbares Bauteil (410, 600, 610, 620) aufweist;
(b) Entkoppeln der Kopplungsanordnung (320, 340, 360) von der Radachsenanordnung (200) und dann Einstellen des wenigstens einen zurückziehbaren und verschwenkbaren Bauteils (410, 600, 610, 620), um sein Anliegen an den zwei oder mehr Hauptstrukturträgern (220) freizugeben;
(c) Entfernen der Torsionsstabanordnung (300) weg von seiner Position zwischen den zwei oder mehr Hauptstrukturträgern (220).

8. Torsionsstabanordnung (300) mit einem Torsionsstab (310), der so betätigbar ist, dass er eine Torsionsbiegung erfährt, wenn er in einem Fahrzeug (10) installiert ist, das zwei oder mehr Hauptlängsstrukturträger (220) aufweist, **dadurch gekennzeichnet, dass** der Torsionsstab (310) im Wesentlichen an seinen Enden eine Kopplungsanordnung (340, 360, 370) aufweist, die für eine Befestigung an einer Radachsenanordnung des Fahrzeugs (10) ausgelegt ist, und dass der Torsionsstab (310) weiterhin im Wesentlichen an einem oder mehr von seinen äußersten Enden wenigstens ein zurückziehbares und verschwenkbares Bauteil (410, 600, 610, 620) aufweist, wobei das wenigstens eine Bauteil (410, 600, 610) für eine Befestigung an den Hauptlängsstrukturträgem (220) ausgelegt ist, um den Torsionsstab (310) in einem Bereich zwischen den Trägem (220) aufzunehmen.

9. Torsionsstabanordnung (300) nach Anspruch 8, wobei das wenigstens eine zurückziehbare und verschwenkbare Bauteil (410, 600, 610, 620) ein flexibles Element (600) aufweist, um zu ermöglichen, dass das wenigstens eine Bauteil (410, 600, 610, 620) zurückgezogen wird, um einen Freiraum zwischen den zwei oder mehr Strukturträgern (220) zu schaffen, wenn die Torsionsstabanordnung (300) während der Installierung zwischen diese manövriert wird.

10. Torsionsstabanordnung (300) nach Anspruch 8 oder 9, wobei das wenigstens eine zurückziehbare und verschwenkbare Bauteil wenigstens eine aus einer Kugelgelenk-Schnittstelle, einer Doppelkegelstumpf-Schnittstelle und einer Einzelkegelstumpf-Schnittstelle aufweist.

11. Torsionsstabanordnung (300) nach irgendeinem der Ansprüche 8 bis 10, wobei wenigstens ein zurückziehbares und verschwenkbares Bauteil (410, 600, 610, 620) einen flexiblen Kern (600) aufweist, der für eine flexible Verformung betätigbar ist, um das wenigstens eine Bauteil (410, 600, 610, 620) zurückzuziehen, wenn die Torsionsstabanordnung (300) in dem Fahrzeug (10) installiert oder von diesem entfernt wird.

12. Torsionsstabanordnung (300) nach Anspruch 11, das Merkmale zum Aufnehmen von Anziehbefestigungselementen (420, 430, 500) aufweist, um den wenigstens einen flexiblen Kern (600) während der Installierung der Torsionsstabanordnung (300) flexibel zu verformen.

13. Torsionsstabanordnung (300) nach irgendeinem der Ansprüche 8 bis 12, wobei der flexible Kern (600) als Ring aus flexiblem Material verwirklicht ist, der wenigstens teilweise innerhalb einer Vielzahl von gegenseitig im Wesentlichen konzentrischen Rohren (610, 620) eingeschlossen ist.

## Revendications

1. Procédé d'installation d'un ensemble de suspension à barre de torsion (300) sur un système de suspension de véhicule (10), le véhicule (10) comprenant au moins deux poutres de structure longitudinales principales (220) le long de celui-ci et au moins un ensemble de roues (20) monté sur au moins un ensemble d'essieu de roue (200), le procédé étant **caractérisé en ce qu'**il comporte les étapes consistant à :
(a) inclure dans l'ensemble de suspension à barre de torsion (300) une barre de torsion (310) opérationnelle pour fléchir en torsion, et aussi un agencement d'accouplement (320, 340, 360) destiné à être utilisé pour accoupler la barre de torsion (310) à son ensemble d'essieu de roue (200) correspondant, la barre de torsion (310) comprenant au moins un composant rétractable et pivotant (410, 600, 610, 620) sensiblement au niveau d'une ou plusieurs de ses extrémités extrêmes ;
(b) ajuster un ou plusieurs parmi le au moins un composant rétractable et pivotant (410, 600, 610, 620) pour le rétracter et le faire pivoter, et ensuite déplacer l'ensemble de barre de torsion (300) dans une position comprise entre les deux ou plus de deux poutres de structure principales (220) ;
(c) coupler l'agencement d'accouplement (320, 340, 360) à l'ensemble d'essieu de roue (200); et
(d) fixer le au moins un composant rétractable et pivotant (410, 600, 610, 620) sur au moins une des deux ou plus de deux poutres de structure principales (200).

2. Procédé selon la revendication 1, **caractérisé en ce que** le au moins un composant rétractable et pivotant (410, 600, 610, 620) comprend un élément souple (600) pour permettre que le au moins un composant (410, 600, 610, 620) soit rétracté pour fournir du jeu entre les deux ou plus de deux poutres de structure (220) lorsque l'ensemble de barre de torsion (300) est manoeuvré entre elles pendant l'installation.

3. Procédé selon la revendication 1 ou 2, **caractérisé en ce qu'**il comprend l'étape consistant à :
(e) mettre en rotation l'agencement d'accouplement (340, 360, 370) dans une position pour venir en contact sur l'ensemble d'essieu de roue (200) après que la barre de torsion (310) soit sensiblement en position entre les deux ou plus de deux poutres de structure principales (220).

4. Procédé selon l'une quelconque des revendications précédentes, **caractérisé en ce que** le au moins un composant rétractable et pivotant comprend au moins un élément parmi : une interface du type rotule, une interface du type double, une interface tronconique unique.

5. Procédé selon l'une quelconque des revendications précédentes, **caractérisé en ce que** le au moins un composant rétractable et pivotant comprend un noyau souple (600) opérationnel pour se déformer de manière souple pour rétracter le au moins un composant (410, 600, 610, 620) lorsque l'ensemble de barre de torsion (300) est installé dans le véhicule (10).

6. Procédé selon la revendication 5, **caractérisé en ce qu'**il comprend l'étape consistant à : serrer des dispositifs de fixation (420, 430, 500) associés avec le au moins un composant rétractable et pivotant (410, 600, 610, 620) pour déformer de manière souple le noyau souple (600) pendant l'installation de l'ensemble de barre de torsion (300).

7. Procédé d'enlèvement d'un ensemble de suspension à barre de torsion (300) à partir d'un système de suspension de véhicule (10), le véhicule (10) comprenant au moins deux poutres de structure longitudinales principales (220) le long de celui-ci et au moins un ensemble de roues (20) monté sur au moins un ensemble d'essieu de roue (200), le procédé étant **caractérisé par** ce qu'il comporte les étapes consistant à :
(a) inclure dans l'ensemble de suspension à barre de torsion (300) une barre de torsion (310) opérationnelle pour fléchir en torsion, et aussi un agencement d'accouplement (320, 340, 360) destiné à être utilisé pour accoupler la barre de torsion (310) à son ensemble d'essieu de roue (200) correspondant, la barre de torsion (310) comprenant au moins un composant rétractable et pivotant (410, 600, 610, 620) sensiblement au niveau d'une ou plusieurs de ses extrémités extrêmes ;
(b) désaccoupler l'agencement de couplage (320, 340, 360) de l'ensemble d'essieu de roue (200) et ensuite ajuster le au moins un composant rétractable et pivotant (410, 600, 610, 620) pour libérer sa butée sur les deux ou plus de deux poutres de structure principales (220) ; et
(c) enlever l'ensemble de barre de torsion (300) loin de sa position entre les deux ou plus de deux poutres de structure principales (220).

8. Ensemble de barre de torsion (300) comprenant une barre de torsion (310) opérationnelle pour subir une flexion de torsion lorsqu'elle est installée dans un véhicule (10) comprenant deux ou plus de deux poutres de structure longitudinales principales (220), **caractérisé en ce que** la barre de torsion (310) comprend sensiblement à ses extrémités un agencement d'accouplement (340, 360, 370) adapté pour être fixé sur un ensemble d'essieu de roue du véhicule (10), et la barre de torsion (310) comprend de plus au moins un composant rétractable et pivotant (410, 600, 610, 620) sensiblement au niveau d'une ou plusieurs de ses extrémité extrêmes, le au moins un composant (410, 600, 610) étant adapté pour être fixé sur les poutres de structure longitudinales principales (220) pour adapter la barre de torsion (310) dans une zone située entre les poutres (220).

9. Ensemble de barre de torsion (300) selon la revendication 8, **caractérisé en ce que** le au moins un composant rétractable et pivotant (410, 600, 610, 620) comprend un élément souple (600) pour permettre que de rétracter le au moins un composant (410, 600, 610, 620) pour fournir un jeu entre les deux ou plus de deux poutres de structure (220) lorsque l'ensemble de barre de torsion (300) est manoeuvré entre elles pendant une installation.

10. Ensemble de barre de torsion (300) selon la revendication 8 ou 9, **caractérisé en ce que** le au moins un composant rétractable et pivotant comprend au moins un élément parmi : une interface du type rotule, une interface du type double, une interface tronconique unique.

11. Ensemble de barre de torsion (300) selon l'une quelconque des revendications 8 à 10, **caractérisé en ce que** le au moins un composant rétractable et pivotant comprend un noyau souple (600) opérationnel pour se déformer de manière souple pour rétracter le au moins un composant (410, 600, 610, 620) lorsque l'ensemble de barre de torsion (300) est installé dans le véhicule ou enlevé du véhicule (10).

12. Ensemble de barre de torsion (300) selon la revendication 11, **caractérisé en ce qu'**il comporte des caractéristiques pour recevoir des dispositifs de fixation par serrage (420, 430, 500) pour déformer de manière souple le au moins un noyau souple (600) pendant l'installation de l'ensemble de barre de torsion (300).

13. Ensemble de barre de torsion (300) selon l'une quelconque des revendications 8 à 12, **caractérisé en ce que** le noyau souple (600) est mis en oeuvre sous la forme d'un anneau de matériau souple au moins partiellement enfermé dans une pluralité de tubes sensiblement mutuellement concentriques (610,620).
